# EUROPEAN PATENT SPECIFICATION

(11) **EP 1 125 813 B1**
(45) Date of publication and mention of the grant of the patent: **08.01.2003**
(21) Application number: 01660021.5
(22) Date of filing: 01.02.2001
(51) Int. Cl.: B61D 17/10

(54) **Floor structure for a railway freight wagon**
Lastbodenstruktur für einen Eisenbahngüterwagen
Structure de plancher pour wagon de marchandises

(30) Priority: 14.02.2000 FI 20000306
(43) Date of publication of application: 22.08.2001
(73) Proprietor: Talgo-Transtech OY, 90101 Oulu (FI)
(72) Inventor: Heikkinen, Jaakko, 90820 Kello (FI); Mäenpää, Olavi, 90650 Oulu (FI)
(74) Representative: Laako, Tero Jussi

(56) References cited:
- DE-U- 9 100 372
- US-A- 2 090 483
- US-A- 3 856 344
- US-A- 5 417 453
- US-A- 5 918 549
- PATENT ABSTRACTS OF JAPAN vol. 005, no. 083 (M-071), 30 May 1981 (1981-05-30) & JP 56 031874 A (SHIN MEIWA IND CO LTD), 31 March 1981 (1981-03-31)

## Description

The invention relates to an at least substantially flat floor for a railway freight wagon, comprising longitudinal beams along the lengthwise sides of a freight wagon, floor supports therebetween, as well as a floor panel on top of the floor supports.

Typically, the floors for railway freight cars, including support members therefor, are composed of a flat floor panel, either sheet steel or boards or the like, which is supported from below first by a number of lengthwise joists which are in turn supported by a number of crosswise joists which are in turn secured at the ends thereof to two longitudinal beams present along the sides of a railway freight wagon and having a length which covers the entire wagon. Examples of such conventional floor structures are described in the publication US-3,856,344, describing a road trailer, or in broad outlines in the publication DE-33 12 001 A1, wherein a floor panel is supported by a number of I-beams lengthwise of the wagon and adjacent to each other, and those are in turn supported by I-beams crosswise of the wagon, which are again secured to longitudinal girders present along the sides of a wagon. Thus, the floor structure disclosed in the cited publication is based on a truss frame system. The above-described floor is indeed rigid, as traditionally required, and such a floor may possess a sufficient strength, but it is complicated and extremely heavy and its manufacture is quite a tedious process. In addition, the floor supports include spots that are prone to collect, not so much water, but certain amounts of mud or the like.

It is an object of the invention to provide a floor for a railway freight wagon, which would have a structure as simple as possible and easy to assemble and which would furthermore be clearly lighter than prior known truss frame floor structures. In this specification, the floor refers to a combination, comprising a structural element constituting a surface for the floor and beams and/or profiles supporting the floor within the confines thereof. A second object of the invention is that the floor strength must nevertheless be sufficiently good. A yet third object of the invention is a floor structure of the above type, which would have as few spots as possible to collect corrosion-activating media, such as water and dirt.

The above problems can be resolved and the above objects can be accomplished by means of a floor structure of the invention, which is characterized by what is defined in the characterizing clause of claim 1.

The most important benefit gained by the invention is that the inventive floor is extremely lightweight, yet sufficiently strong. This is partly based on the surprising discovery that the floor of a railway wagon need not be absolutely rigid, but it may have some resilience in a loaded condition and during running, and partly on the use of profile forms of the invention. At the same time, despite this resilience or elasticity, it has been possible to provide the inventive floor with a high-grade strength. Another surprising discovery has been that the bonding and riveting of structural floor elements securely to each other and to supports external of the floor results in a simple and strong, as well as a durable structure.

The invention will now be described in detail with reference made to the accompanying drawings.

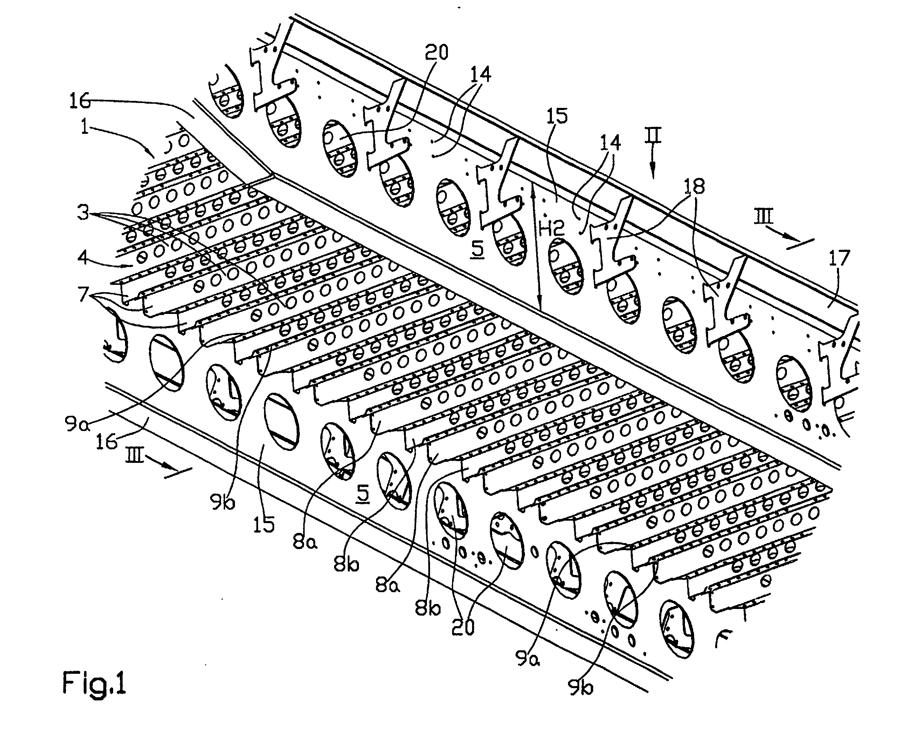

Fig. 1 shows a floor of the invention generally in a view from below, i.e. upwards from railway tracks, and in an axonometric view.

Fig. 2 shows a floor of the invention in a lengthwise elevation along a plane I-I in figs. 3 and 4.

Fig. 3 shows a floor of the invention in a plan view from a direction II in figs. 1, 2 and 4.

Fig. 4 shows a floor of the invention in a crosswise elevation along a plane III-III in figs. 1,2 and 3.

The figure visualizes an at least substantially flat floor 1 for a railway freight wagon, comprising longitudinal beams 5 along the lengthwise sides of a freight wagon, floor supports 4 therebetween, as well as a floor panel 2 on top of the floor supports. According to the invention, the floor supports 4 only consist of a number of hat profiles 3 transverse to a freight wagon, which are secured at ends 7 thereof to said longitudinal side beams 5 of a freight wagon and which are downwards open. Thus, the inventive floor 1 does not include any freight-wagon length LL compliant, i.e. lengthwise supporting joists or bearing profiles between the two longitudinal side beams 5 of a wagon, but only crosswise hat profiles typically transverse to the longitudinal side beams. Each hat profile 3 consists of two webs 8a, 8b at a horizontal distance W1 from each other, a joint flange 10 connecting the same at the top edges thereof, as well as a bottom flange 9a, 9b pointing away from each other at the bottom edge of each web, such that the hat profile 3 is more or less in the shape of 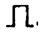 . Moreover, according to the invention, the floor panel 2 is bonded with an adhesive 6 to the upward-facing joint flange 10 of each hat profile connecting the webs 8a, 8b of a profile. Hence, the floor panel 2 only supports itself essentially on the joint flanges 10 of hat profiles.

The hat profile 3 has a height H1, which is less, and preferably substantially *less* than a height H2 of said longitudinal beams 5. Typically, the height H1 of hat profiles is no more than 80% and often no more than 60% of the height H2 of longitudinal beams. The mutual ratio between the maximum height H1 of the hat profiles 3 and the maximum width W2 thereof, including the bottom flanges 9a, 9b, is within the range of 1:4-3:1, preferably within the range of 1:3-2:1. The adjacent and parallel hat profiles 3 have a distance W3 between the webs thereof closest to each other, which is 50%-200% of the distance W1 between two of said webs of a hat profile. It is obvious from this that the number of hat profiles 3 is in the order of twenty to forty in the floor of a freight wagon for the duty of supporting the floor panel 2.

In order to fasten the hat profiles 3 against the longitudinal side beams 5 of a wagon, each hat profile is provided at each end thereof as an extension to each web 8a, 8b with elbows 13 pointing towards or away from each other. These elbows are set against the face-to-face surfaces of the webs of the longitudinal beams 5 and secured to said longitudinal beams 5 by means of rivets 14 extending through said elbows 13 and webs 15 of the longitudinal beams. The hat profiles 3 are only fastened to the longitudinal beams at the webs 15 thereof, not at all to top flanges 17 of the longitudinal beams, thereby avoiding the development of discontinuities which could in turn lead to an adverse condition, for example with regard to fatigue stress.

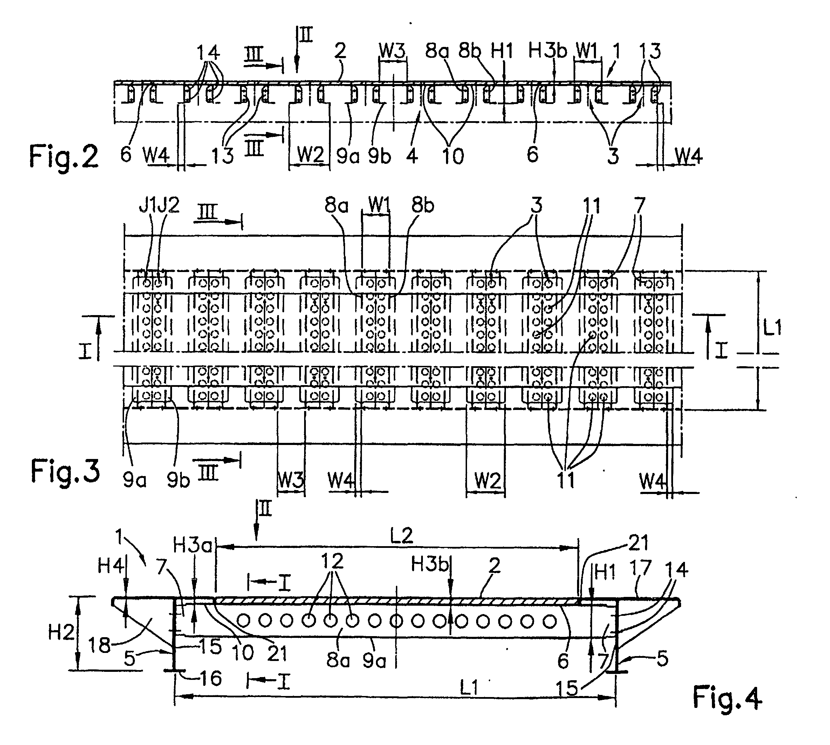

According to the most preferred embodiment of the invention, each joint flange 10 of hat profiles comprises a row or rows J1 and J2 of circular or oblong holes 11, which is/are substantially parallel to a length L1 of the hat profile 3. In the embodiment of fig. 3, the holes 11 present in various rows J1, J2 are in line with each other or side by side along the length L1 of a hat profile. Alternatively, the holes 11 of various rows J1, J2 are in alternating positions along the length L1 of a hat profile. Regarding the hat profiles, each web 8a, 8b is also preferably provided with a row, or optionally, rows of circular or oblong holes 12, which is/are substantially parallel to the length L1 of a hat profile. The figures only depict a single row of web holes 12, but obviously there may be more than that, the successive holes 12 being at alternating levels in the web or coinciding with each other as in the joint flange 10. The bottom flanges 9a, 9b may also include holes, or be intact, depending on other dimensions. It is obvious that the joint flange 10, the webs 8a, 8b, and the bottom flanges 9a, 9b may all be intact or just one type of section thereof may include holes or two different types of sections may include holes, as in the illustrated embodiment, or all types of sections may include holes, without departing from the scope of the invention. In principle, the hat profiles 3 may be asymmetrical in numerous ways, but the most preferred solution is to use a symmetrical hat profile. Likewise, it is preferred that just one type of hat profile be used across the entire length LL of a wagon floor, although there is nothing to prevent the use of various types of hat profiles in various sections of the floor.

In hat profiles, each bottom flange 9a, 9b has preferably an equal width for a symmetrical hat profile, as described above. Moreover, each individual bottom flange 9a and 9b has a width W4, which as measured from its web 8a and 8b, respectively, is 15%-50% of the inter-web distance W1, equalling the width of a joint flange. It should be appreciated that the dimensions set forth in this context, as well as those foregoing dimensions regarding the floor along with its supports, are merely given in the way of guidelines and the dimensioning can be carried out as required by a particular situation and railway freight wagon.

Said floor panel 2 is preferably made in water-proof plywood or the like and said adhesive 6 comprises at least somewhat elastic synthetic polymer, available in a plurality of types suitable for this purpose, such as polyurethane adhesives or the like. Hence, this adhesive 6 is not described in more detail.

Said longitudinal beams 5 comprise a vertical web 15 and a bottom flange 16, as well as a top flange 17. The longitudinal beams present along the opposite sides of a wagon have the top flanges 17 thereof extending from the webs 15 thereof towards each other, forming a space L2 therebetween, and the top flanges have an effective thickness H3a which is substantially equal to a thickness H3b of said floor panel. In this embodiment, the top flanges 17 of longitudinal beams have a material thickness H4 which is less than the floor panel thickness H3b and the top flange has its face-to-face edges bent downwards for an elbow having a height which is equal to the floor panel thickness, the top flange being in contact with the entire thickness of the floor panel 2. Of course, it is possible to provide the longitudinal beams with an even thicker top flange. The floor panel or floor panels 2 is/are adapted to have such a width that the space L2 between the top flanges of longitudinal beams is/are filled thereby. In addition, each longitudinal side beam 5 of a wagon is provided with more or less triangular reinforcements 19 set between its web 15 and top flanges 17 pointing away from each other. The web 15 of said longitudinal beams is provided with lightening holes 20 in the mid-section of its height H2.

It is obvious that both the hat profiles 3 and the longitudinal side beams 5 *of* a wagon, as well as the floor panel 2, have thicknesses thereof dimensioned according to loads existing in a railway wagon. However, as long as a railway freight wagon is properly designed in terms of its other details, the wagon floor can be made more elastic or resilient than what it used to be.

## Claims

1. An at least substantially flat floor (1) for a railway freight wagon, comprising longitudinal beams (5) along the lengthwise sides of the freight wagon, floor supports (4) therebetween, as well as a floor panel (2) on top of the floor supports, **characterized in that** the floor supports (4) only consist of a number of hat profiles (3) transverse to a freight wagon, which are secured at ends (7) thereof to said longitudinal side beams (5) of the freight wagon and which are downwards open; and that the floor panel (2) is bonded with an adhesive (6) to an upward-facing joint flange (10) included in each hat profile and connecting webs (8a, 8b) of the profile.

2. A freight wagon floor as set forth in claim 1, **characterized in that** the hat profile (3) consists of two webs (8a, 8b) at a horizontal distance (W1) from each other, a joint flange (10) connecting the same at the top edges thereof, as well as a bottom flange (9a, 9b) pointing away from each other at the bottom edge of each web; and that the hat profile (3) has a height (H1) which is less than a height (H2) of said longitudinal beams (5).

3. A freight wagon floor as set forth in claim 1 or 2, **characterized in that** the hat profile (3) has a maximum height (H1) and a maximum width (W2), including the bottom flanges (9a, 9b), the ratio therebetween being within the range of 1:4-3:1, preferably within the range of 1:3-2:1; and that the closest-together webs of adjacent hat profiles (3) have a distance (W3) therebetween, which is 50% - 200% of the distance (W1) between two webs of a hat profile.

4. A freight wagon floor as set forth in claim 1 or 2, **characterized in that** the hat profiles have each bottom flange (9a, 9b) equal in width and each individual bottom flange has a width (W4) extending from its web, which is 15%-50% of the inter-web distance (W1) or the width of a joint flange.

5. A freight wagon floor as set forth in any of the preceding claims, **characterized in that** the hat profiles have each joint flange (10) comprising a row or rows (J1, J2) of circular or oblong holes (11), which is/are substantially parallel to a hat profile length (L1), or in which the holes (11) of various rows are located in an alternating fashion along the length of a joint flange.

6. A freight wagon floor as set forth in any of the preceding claims, **characterized in that** the hat profiles have each web (8a, 8b) comprising a row or rows of circular or oblong holes (12), which is/are substantially parallel to a hat profile length (L1), or in which the successive holes (12) are located at alternating levels in a web.

7. A freight wagon floor as set forth in any of the preceding claims, **characterized in that** the hat profiles (3) have the ends thereof provided, as an extension to the webs (8a, 8b), with elbows (13) directed either towards each other or away from each other; and that the hat profiles are in contact with said longitudinal beams (5) by means of rivets (14) extending through the elbows and the longitudinal beams.

8. A freight wagon floor as set forth in any of the preceding claims, **characterized in that** said floor panel (2) is made in water-proof plywood or the like; and that said adhesive (6) comprises some elastic synthetic polymer.

9. A freight wagon floor as set forth in claim 1 or 8, **characterized in that** said longitudinal beams (5) comprise a vertical web (15) and a bottom flange (16), as well as a top flange (17), that the top flanges (17) of the longitudinal beams present along the opposite sides of the wagon extend from the webs thereof towards each other and have a thickness (H2) which is substantially equal to that of said floor panel; and that the floor panel(s) (2) fills/fill a space (L2) between these top flanges of the longitudinal beams.

## Patentansprüche

1. Ein wenigstens im wesentlichen flacher Boden (1) für einen Eisenbahngüterwagen, umfassend Längsbalken (5) entlang der Längsseiten des Güterwagens, Bodenträger (4) dort zwischen, sowie eine Bodenplatte (2) oben auf den Bodenträgem, **dadurch gekennzeichnet, dass** die Bodenträger (4) nur aus einer Anzahl von Hutprofilen (3) quer zu einem Güterwagen bestehen, welche an ihren Enden (7) an den gesagten Längsseitenbalken (5) des Güterwagens befestigt sind und welche nach unten geöffnet sind; und dass die Bodenplatte (2) mit einem Klebstoff (6) an einem nach oben gerichteten Verbindungsflansch (10) angebunden ist, der in jedem Hutprofil umfasst ist und die Stege (8a, 8b) des Profils verbindet.

2. Ein Eisenbahngüterwagenboden, wie beschrieben in Anspruch 1, **dadurch gekennzeichnet, dass** das Hutprofil (3) aus zwei Stegen (8a, 8b) mit einem horizontalen Abstand (W1) voneinander besteht, einem Verbindungsflansch (10), der dieselben an ihren oberen Kanten verbindet, sowie einem Bodenflansch (9a, 9b), der voneinander wegzeigt an den unteren Kanten von jedem Steg; und dass das Profil (3) eine Höhe (H1) aufweist, welche kleiner als eine Höhe (H2) der gesagten Längsbalken (5) ist.

3. Ein Eisenbahngüterwagenboden, wie beschrieben in Anspruch 1 oder 2, **dadurch gekennzeichnet, dass** das Profil (3) eine maximale Höhe (H1) und eine maximale Breite (W2) aufweist, umfassend die Bodenflansche (9a, 9b), wobei das Verhältnis dort zwischen innerhalb des Bereiches von 1:4 - 3:1 liegt, vorzugsweise in dem Bereich von 1:3 - 2:1; und dass die am dichtesten zusammenliegenden Stege von benachbarten Hutprofilen (3) einen Abstand (W3) zwischen sich aufweisen, welcher 50 %- 200 % des Abstandes (W1) zwischen zwei Stegen eines Hutprofiles beträgt.

4. Ein Eisenbahngüterwagenboden, wie beschrieben in Anspruch 1 oder 2, **dadurch gekennzeichnet, dass** die Hutprofile jeweils einen Bodenflansch (9a, 9b), aufweisen, der gleichmäßig in der Breite ist, und jeder individuelle Bodenflansch eine Breite (W4) aufweist, die sich von seinem Steg aus erstreckt, welche 15 % - 50 % des Zwischenstegabstandes (W1) oder der Breite von einem Verbindungsflansch beträgt.

5. Ein Eisenbahngüterwagenboden, wie beschrieben in einem der vorhergehenden Ansprüche, **dadurch gekennzeichnet, dass** die Hutprofile jeweils einen Verbindungsflansch (10) aufweisen, umfassend eine Reihe oder Reihen (J1, J2) von kreisförmigen oder länglichen Bohrungen (11), welche im wesentlichen parallel zu einer Hutprofillänge (L1) ist/sind oder in welchen die Bohrungen (11) von verschiedenen Reihen in einer abwechselnden Art und Weise entlang der Länge eines Verbindungsflansches positioniert sind.

6. Ein Eisenbahngüterwagenboden, wie beschrieben in einem der vorhergehenden Ansprüche, **dadurch gekennzeichnet, dass** die Hutprofile jeweils einen Steg (8a, 8b) aufweisen, umfassend eine Reihe oder Reihen von kreisförmigen oder länglichen Bohrungen (12), welche im wesentlichen parallel zu einer Hutprofillänge (L1) ist/sind oder in welchen die aufeinander folgenden Bohrungen (12) in alternierenden Ebenen in einem Steg positioniert sind.

7. Ein Eisenbahngüterwagenboden, wie beschrieben in einem der vorhergehenden Ansprüche, **dadurch gekennzeichnet, dass** die Hutprofile (3) Enden aufweisen, welche als eine Verlängerung zu den Stegen (8a, 8b) vorgesehen sind, mit Ellbogen (13), die entweder in Richtung zueinander oder voneinander weg ausgerichtet sind; und dass die Hutprofile in Kontakt mit den gesagten Längsbalken (5) stehen, mittels Nieten (14), die sich durch die Ellbogen und die Längsbalken erstrecken.

8. Ein Eisenbahngüterwagenboden, wie beschrieben in einem der vorhergehenden Ansprüche, **dadurch gekennzeichnet, dass** die gesagte Bodenplatte (2) aus einem wasserfesten Sperrholz oder ähnlichem hergestellt ist; und dass der gesagte Klebstoff (6) etwas elastisches synthetisches Polymer umfasst.

9. Ein Eisenbahngüterwagenboden, wie beschrieben in Anspruch 1 oder 8, **dadurch gekennzeichnet, dass** die Längsbalken (5) einen vertikalen Steg (15) und einen Bodenflansch (16) umfassen, sowie einen oberen Flansch (17), und dass die oberen Flansche (17) der Längsbalken, welche entlang der entgegengesetzten Seiten des Wagens liegen, sich von den Stegen derselben in Richtung zueinander erstrecken und eine Dicke (H2) aufweisen, welche im wesentlichen gleich zu derjenigen der gesagten Bodenplatte ist; und dass die Bodenplatte(n) (2) einen Raum (L2) zwischen diesen oberen Flanschen der Längsbalken auffüllt/auffüllen.

## Revendications

1. Plancher au moins substantiellement plat (1) pour wagon de transport de marchandises par chemin de fer, comprenant des longerons (5) le long des côtés dans le sens de la longueur du wagon de marchandises, des supports de plancher (4) entre eux, ainsi qu'un panneau de plancher (2) sur le dessus des supports de plancher, **caractérisé en ce que** les supports de plancher (4) consistent seulement en un certain nombre de profilés en forme de chapeau (3) transversaux d'un wagon de marchandises, qui sont fixés par leurs extrémités (7) auxdits longerons latéraux (5) du wagon de marchandises et sont ouverts en dessous; et **en ce que** le panneau de plancher (2) est lié par un adhésif (6) à un rebord d'assemblage tourné face en haut (10) inclus dans chaque profilé en forme de chapeau et reliant des âmes (8a, 8b) du profilé.

2. Plancher de wagon de marchandises selon la revendication 1, **caractérisé en ce que** le profilé en forme de chapeau (3) consiste en deux âmes (8a, 8b) à une certaine distance horizontale (W1) l'une de l'autre, un rebord d'assemblage (10) reliant les mêmes au niveau de leurs arêtes supérieures, ainsi qu'un rebord inférieur (9a, 9b) chacun dirigé à l'opposé de l'autre au niveau de l'arête inférieure de chaque âme; et **en ce que** le profilé en forme de chapeau (3) a une hauteur (H1) qui est inférieure à une hauteur (H2) desdits longerons (5).

3. Plancher de wagon de marchandises selon la revendication 1 ou 2, **caractérisé en ce que** le profilé en forme de chapeau (3) a une hauteur maximale (H1) et une largeur maximale (W2), incluant les rebords inférieurs (9a, 9b), le rapport entre elles étant inclus dans l'intervalle de 1:4 à 3:1, de préférence dans l'intervalle de 1:3 à 2:1; et **en ce que** les âmes les plus proches l'une de l'autre de profilés en forme de chapeau (3) adjacents ont une distance (W3) entre elles, qui vaut de 50 à 200% de la distance (W1) entre deux âmes d'un profilé en forme de chapeau.

4. Plancher de wagon de marchandises selon la revendication 1 ou 2, **caractérisé en ce que** les profilés en forme de chapeau ont chaque rebord inférieur (9a, 9b) de largeur égale et chaque rebord inférieur individuel a une largeur (W4) s'étendant depuis son âme, qui vaut de 15 à 50% de la distance inter-âmes (W1) ou de la largeur d'un rebord d'assemblage.

5. Plancher de wagon de marchandises selon l'une quelconque des revendications précédentes, **caractérisé en ce que** les profilés en forme de chapeau ont chaque rebord d'assemblage (10) comprenant une rangée ou des rangées (J1, J2) de trous circulaires ou oblongs (11), qui est/sont sensiblement parallèle(s) à une longueur (L1) du profilé en forme de chapeau, ou dans lesquelles les trous (11) de rangées différentes sont placés d'une manière alternée suivant la longueur d'un rebord d'assemblage.

6. Plancher de wagon de marchandises selon l'une quelconque des revendications précédentes, **caractérisé en ce que** les profilés en forme de chapeau ont chaque âme (8a, 8b) comprenant une rangée ou des rangées de trous circulaires ou oblongs (12), qui est/sont sensiblement parallèle(s) à une longueur (L1) du profilé en forme de chapeau, ou dans lesquelles les trous successifs (12) sont placés à des niveaux alternés dans une âme.

7. Plancher de wagon de marchandises selon l'une quelconque des revendications précédentes, **caractérisé en ce que** les profilés en forme de chapeau (3) ont leurs extrémités munies, en tant que prolongement des âmes (8a, 8b), de coudes (13) dirigés soit l'un vers l'autre soit à l'opposé l'un de l'autre; et **en ce que** les profilés en forme de chapeau sont en contact avec lesdits longerons (5) au moyen de rivets (14) s'étendant à travers les coudes et les longerons.

8. Plancher de wagon de marchandises selon l'une quelconque des revendications précédentes, **caractérisé en ce que** ledit panneau de plancher (2) est fait de contre-plaqué imperméable à l'eau ou équivalent; et **en ce que** ledit adhésif (6) comprend un polymère synthétique élastique.

9. Plancher de wagon de marchandises selon la revendication 1 ou 8, **caractérisé en ce que** lesdits longerons (5) comprennent une âme verticale (15) et un rebord inférieur (16), ainsi qu'un rebord supérieur (17), **en ce que** les rebords supérieurs (17) des longerons présents le long des côtés opposés du wagon s'étendent depuis leurs âmes l'un vers l'autre et ont une épaisseur (H2) qui est sensiblement égale à celle dudit panneau de plancher; et **en ce que** le ou les panneaux de plancher (2) remplissent un espace (L2) compris entre ces rebords supérieurs des longerons.
